# EUROPÄISCHE PATENTSCHRIFT

(11) **EP 2 568 229 B1**
(45) Veröffentlichungstag und Bekanntmachung des Hinweises auf die Patenterteilung: **07.08.2019**
(21) Anmeldenummer: 12004232.0
(22) Anmeldetag: 02.06.2012
(51) Int. Cl.: F24F 12/00, F28D 9/00, F28F 9/02, F28D 21/00

(54) **Wärmeaustauscher**
Heat exchanger
Echangeur thermique

(30) Priorität: 12.09.2011 DE 102011112857
(43) Veröffentlichungstag der Anmeldung: 13.03.2013
(73) Patentinhaber: FläktGroup Deutschland GmbH, 44625 Herme (DE)
(72) Erfinder: Westerdorf, Thomas, 44805 Bochum (DE)
(74) Vertreter: Cohausz Hannig Borkowski Wißgott

(56) Entgegenhaltungen:
- EP-A1- 1 132 690
- EP-A1- 2 096 369
- EP-A2- 1 586 691
- EP-A2- 1 598 607
- GB-A- 2 311 845
- US-B1- 6 434 963

## Beschreibung

Die Erfindung betrifft einen Wärmeaustauscher mit einem Wärmetauscherblock und mit in dem Wärmetauscherblock angeordneten Gegenstrom-Plattenwärmetauschern, wobei auf der ersten Seite des Wärmetauscherblocks im unteren Blockbereich der Außenlufteinlass und im oberen Blockbereich der Zuluftauslass angeordnet ist, und wobei auf der entgegengesetzten zweiten Seite des Wärmetauscherblocks im unteren Blockbereich der Fortluftauslass und im oberen Blockbereich der Ablufteinlass angeordnet ist, wobei
Ein Wärmeaustauscher ist in der nicht vorveröffentlichten DE 102010045381.1 beschrieben, bei dem die Gegenstromplattenwärmetauscher parallel geschaltet sind. Um eine einwandfreie Funktion zu erhalten, erfolgt die Strömungsrichtung des Abluftstroms innerhalb des Wärmetauscherblocks durch die Wärmerückgewinnung aus Gründen der Kondensatabfuhr von oben nach unten. Deshalb tritt die Zuluft oben aus dem Wärmetauscherblock aus, so dass weitere, die Zuluft behandelnde Funktionseinheiten, wie Heizen, Kühlen oder Befeuchten, das Geräteoberteil verlängern, ohne dass auf der Geräteunterseite eine Gerätekammer erforderlich ist. Bei Geräten zur Außenaufstellung ist zusätzlich von Nachteil, dass die Luftkanäle ins Gebäude von der Geräteoberseite an Außenluftansaug bzw. Fortluftausblas vorbei, nach unten geführt werden müssten. Weiterhin würde die Außenluft direkt über dem Boden angesaugt.

Ein Wärmetauscher ist aus der GB 2 311 845 bekannt. Auch hier kommt es beim Einbau der Wärmetauschervorrichtung zu ungünstigen Luftkanallängen, da der Ablufteintritt entfernt vom Gebäude liegt.

Dokument EP 1 586 691 A2 offenbart:
Ein Wärmeaustauscher mit einem Wärmetauscherblock und mit in dem Wärmetauscherblock angeordneten Gegenstrom-Plattenwärmetauschern,
wobei auf der ersten Seite des Wärmetauscherblocks im unteren Blockbereich der Außenlufteinlass und im oberen Blockbereich eine erste Öffnung angeordnet ist,
wobei auf der entgegengesetzten zweiten Seite des Wärmetauscherblocks im unteren Blockbereich der Fortluftauslass und im oberen Blockbereich eine zweite Öffnung angeordnet ist, und
wobei vor der ersten Seite des Wärmetauscherblocks eine Luftumlenkeinrichtung angeordnet ist, mit mindestens einem ersten Umlenkkanal, der den unteren Außenlufteinlass des Wärmetauscherblocks mit einem oberen Außenlufteinlass der Luftumlenkeinrichtung verbindet, und mit mindestens einem zweiten den ersten Umlenkkanal kreuzenden zweiten Umlenkkanal, der die obere erste Öffnung des Wärmetauscherblocks mit einem unteren Zuluftauslass der Luftumlenkeinrichtung verbindet,
wobei vor der zweiten Seite des Wärmetauscherblocks eine zweite Luftumlenkeinrichtung angeordnet ist, mit mindestens einem ersten Umlenkkanal, der den unteren Fortluftauslass des Wärmetauscherblocks mit einem oberen Fortluftauslass der zweiten Luftumlenkeinrichtung verbindet, und mit mindestens einem zweiten, den ersten Umlenkkanal der zweiten Luftumlenkeinrichtung kreuzenden, zweiten Umlenkkanal, der die obere zweite Öffnung des Wärmetauscherblocks mit einem unteren Ablufteinlass der zweiten Luftumlenkeinrichtung verbindet.

Aufgabe der Erfindung ist es, einen Wärmeaustauscher der eingangs genannten Art so zu verbessern, dass der/die mit dem Gebäude verbundene(n) Luftauslass/Luftauslässe für die Zuluft und/oder der Lufteinlass/die Lufteinlässe für die Abluft näher dem Gebäude sind oder gleich nahe dem Gebäude sind wie die übrigen Luftein- und auslässe, und ferner auch der Ablufteintritt beim Wärmetauscherblock nahe dem Gebäude und damit technisch und räumlich optimal angeordnet ist.

Diese Aufgabe wird erfindungsgemäß durch einen Wärmeaustauscher gemäss Anspruch 1 gelöst.

Beim Wärmeaustauscherblock liegt hierdurch der Ablufteintritt nahe dem Gebäude und ist damit technisch und räumlich optimal angeordnet. Auch tritt die Zuluft unten aus dem Wärmetauscherblock aus, so dass der Zuluftaustritt und mögliche weitere, die Zuluft behandelnde Einrichtungen technisch und räumlich optimal nahe dem Gebäude sind.

Bei großen Luftmengen erhöht sich die Baulänge des Wärmetauschermoduls, was bei den meist beengten Platzbedingungen dazu führt, dass große Luftmengen über 10.000 m³/h weniger optimal mit der beschriebenen Lösung ausgerüstet werden können. Dies wird erfindungsgemäß dadurch gelöst, dass zwei Wärmetauscherblöcke übereinander oder nebeneinander angeordnet sind und die Umlenkkanäle, in den vor einer oder beiden Seiten angeordnete(n) Luftumlenkeinrichtung(en), innerhalb der Luftumlenkeinrichtung(en) derart verzweigen, dass jeweils der Lufteinlass der Luftumlenkeinrichtungen mit beiden Lufteinlässen des Wärmetauscherblocks und jeweils der Luftauslass der Luftumlenkeinrichtungen mit beiden Luftauslässen des Wärmetauscherblocks verbunden ist.

Eine erhebliche Verbesserung der Lage der Luftaustritte und Lufteintritte wird schon dann erreicht, wenn diese beim Wärmetauscherblock in gleicher Höhe liegen. Deshalb wird vorgeschlagen, dass bei einem Wärmeaustauscher der eingangs genannten Art vor der ersten Seite des Wärmetauscherblocks eine Luftumlenkeinrichtung angeordnet ist, mit mindestens einem ersten Umlenkkanal, der den unteren Außenlufteinlass des Wärmetauscherblocks mit einem seitlichen Außenlufteinlass der Luftumlenkeinrichtung verbindet, und mit mindestens einem zweiten Umlenkkanal, der den oberen Zuluftauslass des Wärmetauscherblocks mit einem Zuluftauslass der Luftumlenkeinrichtung verbindet, der neben dem Außenlufteinlass der Luftumlenkeinrichtung liegt.

Hierbei kann der Zuluftauslass der Luftumlenkeinrichtung in gleicher Höhe liegen, wie der Außenlufteinlass der Luftumlenkeinrichtung.

In gleicher Weise ist vorteilhaft, wenn vor der zweiten Seite des Wärmetauscherblocks eine zweite Luftumlenkeinrichtung angeordnet ist, mit mindestens einem ersten Umlenkkanal, der den unteren Fortluftauslass des Wärmetauscherblocks mit einem seitlichen Fortluftauslass der zweiten Luftumlenkeinrichtung verbindet, und mit mindestens einem zweiten Umlenkkanal, der den oberen Ablufteinlass des Wärmetauscherblocks mit einem Ablufteinlass der zweiten Luftumlenkeinrichtung verbindet, der neben dem Fortluftauslass der zweiten Luftumlenkeinrichtung liegt. Hierbei kann der Ablufteinlass der zweiten Umlenkeinrichtung in gleicher Höhe liegen wie der Fortluftauslass der zweiten Luftumlenkeinrichtung.

Eine optimale Luftführung und kleine Bauweise wird erreicht, wenn die in den Luftumlenkeinrichtungen befindlichen Luftströme einer Luftart jeweils durch mindestens zwei Kanäle geführt sind, die zueinander parallel liegen.

Drei Ausführungsbeispiele der Erfindung sind in den Zeichnungen dargestellt und werden im Folgenden näher beschrieben. Es zeigen
- Fig. 1: eine perspektivische Ansicht eines Wärmetauscherblocks mit beidseitig angesetzten, Kanäle aufweisenden Luftumlenkeinrichtungen, teilweise im Schnitt,

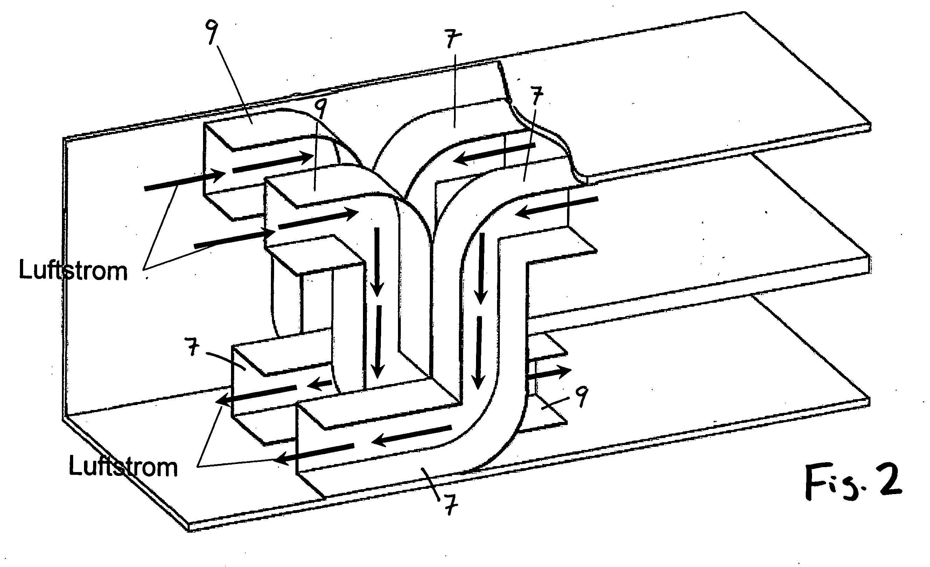

- Fig. 2: eine Luftumlenkeinrichtung nach Fig. 1,
- Fig. 3: zwei Wärmeaustauscher nach Fig. 1, übereinander gesetzt,
- Fig. 4: eine Luftumlenkeinrichtung nach Fig. 3,
- Fig. 5: eine perspektivische Ansicht eines Wärmetauscherblocks mit beidseitig angesetzten Luftumlenkeinrichtungen, deren Luftumlenkung durch ebene Leitbleche erfolgt,
- Fig. 6: eine perspektivische Ansicht eines Wärmetauscherblocks mit beidseitig angesetzten Luftumlenkeinrichtungen, deren Luftumlenkung durch gekrümmte Leitbleche erfolgt,

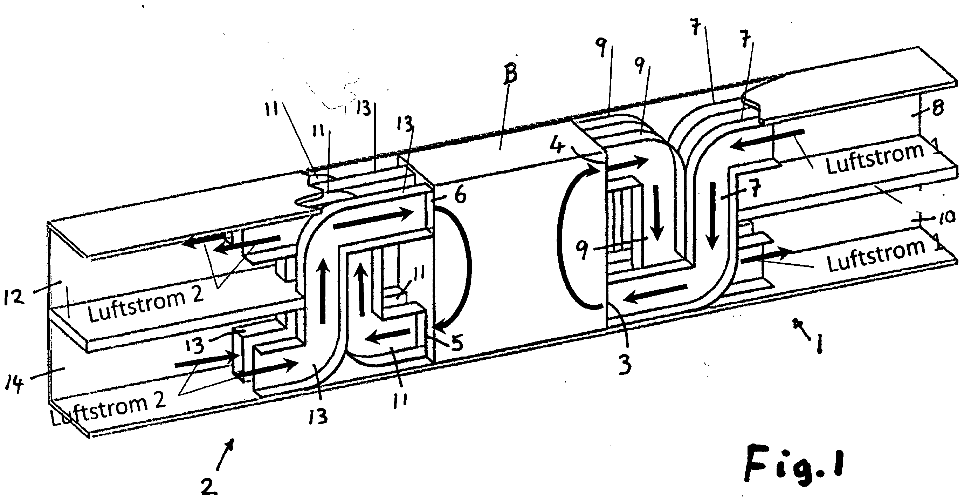

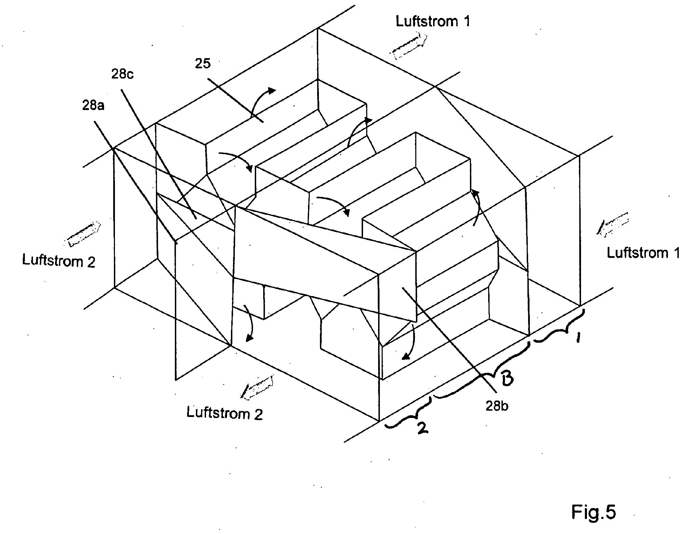

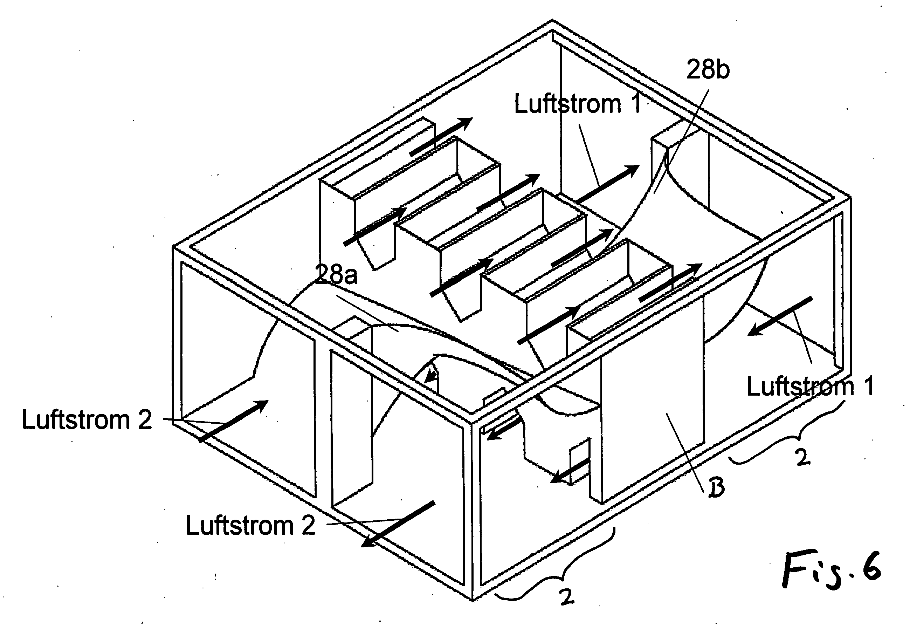

Der Wärmeaustauscher (Fig. 1) zum Wärmen, Kühlen, Befeuchten und/oder Trocknen der Raumluft eines Gebäudes weist einen im Wesentlichen quaderförmigen Wärmetauscherblock B auf mit auf entgegengesetzten, senkrechten Seiten angeordneten Lufteinlass- und Luftauslassöffnungen. Auf seiner ersten Seite befindet sich unten mindestens ein Außenlufteinlass 3 und darüber oben mindestens ein Zuluftauslass 4. Auf der gegenüberliegenden Seite befindet sich unten mindestens ein Fortluftauslass 5 und darüber oben mindestens ein Ablufteinlass 6. Innerhalb des Blockes B befindet sich nur der in Fig. 5 und 6 dargestellte Gegenstrom-Plattenwärmetauscher, wobei der Aufbau, die Luftführungen und die Arbeitsweise im Block B in der nicht vorveröffentlichten DE 102010045381.1 beschrieben sind. Hierbei ist die Strömungsrichtung des Abluftstromes aus Gründen der Kondensatabfuhr im Wesentlichen von oben nach unten.

Auf beiden, die Lufteinlässe und Luftauslässe aufweisenden Seiten des Wärmetauscherblocks B ist jeweils eine Luftumlenkeinrichtung 1, 2 angeschlossen insbesondere befestigt, die für jeden Luftstrom mindestens einen Umlenkkanal 7, 9, 11, 13 aufweist. Auf der ersten Seite des Wärmetauscherblocks B ist die erste Luftumlenkeinrichtung 1 angeschlossen, mit einem ersten Umlenkkanal 7, der den unteren Außenlufteinlass 3 des Wämetauscherblocks mit einem oberen Außenlufteinlass 8 der Luftumlenkeinrichtung 1 verbindet und hierzu S-förmig zweimal um 90 Grad umgebogen ist. Parallel zu diesem Umlenkkanal 7 ist noch ein zweiter, gleich geformter Umlenkkanal direkt daneben anliegend oder wie im Ausführungsbeispiel in einem Abstand angeordnet, so dass zwischen den zwei zueinander parallelen Umlenkkanälen ein sich kreuzender Umlenkkanal 9 liegt. Dieses sich ineinander Verschachteln der Umlenkkanäle ist auch bei der zweiten Luftumlenkeinrichtung 2 gegeben, die weiter unten beschrieben wird.

Die erste Luftumlenkeinrichtung 1 weist zudem einen vorzugsweise zwei weitere S-förmig gebogene Umlenkkanäle 9 auf, die den oberen Zuluftauslass 4 des Wärmetauscherblocks B mit einem unteren Zuluftauslass 10 der Luftumlenkeinrichtung 1 verbindet. Durch diese zwei, vorzugsweise vier Umlenkkanäle (d. h. zwei Umlenkkanalpaare) sorgt die erste Luftumlenkeinrichtung 1 dafür, dass bei dem gesamten Wärmeaustauscher die Außenluft oben eintritt und die Zuluft unten nahe dem Gebäude austritt.

Auf der gegenüberliegenden Seite ist eine zweite Luftumlenkeinrichtung 2 befestigt mit einem vorzugsweise zwei zueinander parallelen ersten Umlenkkanal/Umlenkkanäle 11 in S-Form, die den unteren Fortluftauslass 5 des Wärmetauscherblocks B mit einem oberen Fortluftauslass 12 der zweiten Luftumlenkeinrichtung 2 verbindet. Ferner weist die zweite Luftumlenkeinrichtung 2 auch einen insbesondere zwei weitere zweite Umlenkkanäle 13 auf, die den oberen Ablufteinlass 6 des Wärmetauscherblocks B mit einem unteren Ablufteinlass 14 der zweiten Luftumlenkeinrichtung 2 verbindet. Damit sorgt die zweite Luftumlenkeinrichtung 2 dafür, dass die Fortluft oben austritt und die Abluft des Gebäudes unten nahe dem Gebäude eintritt.

Der Wärmeaustauscher bildet in der Ausführung nach Fig. 1 eine längliche Einheit mit den zwei auf gegenüberliegenden Stirnseiten befestigten Luftumlenkeinrichtungen 1, 2. Stattdessen können eine oder beide Luftumlenkeinrichtungen L-förmig abgeknickt sein, so dass die Ein- und Auslässe 8, 10, 12, 14 sich seitlich befinden.

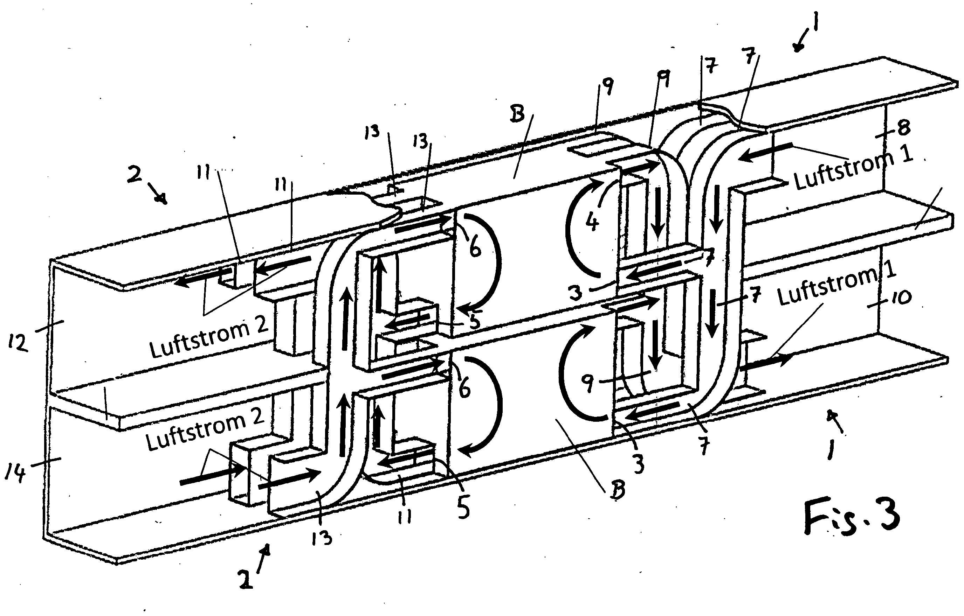

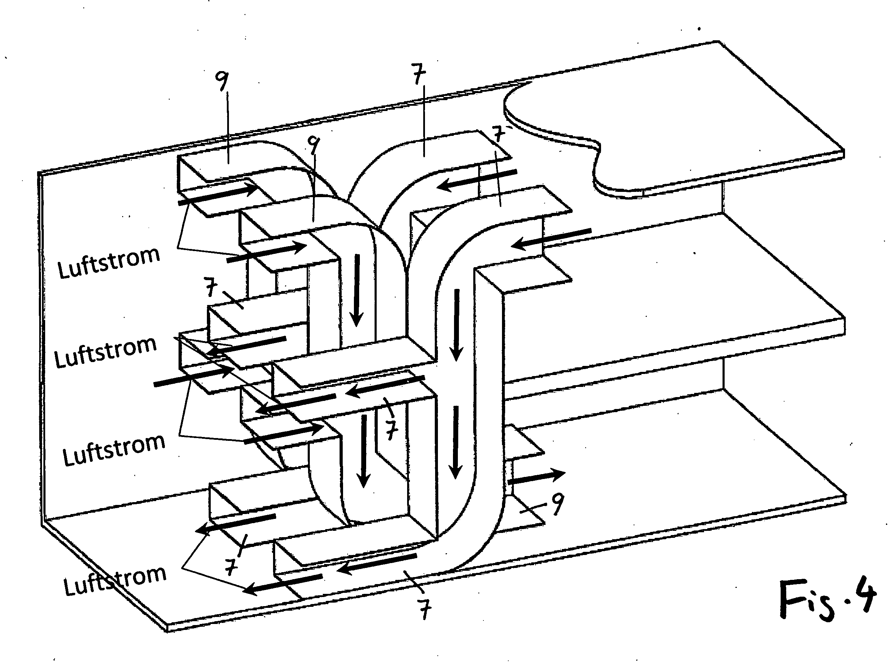

Das Ausführungsbeispiel nach Fig. 3 und 4 unterscheidet sich von dem ersten nur dadurch, dass zwei, in gleicher Weise ausgeführte Wärmeaustauscher übereinander gesetzt sind mit gemeinsamen Ein- und Auslässen 8, 10, 12, 14. In einer weiteren, nicht dargestellten Ausführung sind zwei Wärmeaustauscher dieser Bauart nebeneinander angeordnet.

Das Ausführungsbeispiel nach Fig. 5 und 6 unterscheidet sich von den vorherigen dadurch, dass die Umlenkkanäle 7, 9, 11, 13 in den Luftumlenkeinrichtungen 1, 2 von Leitblechen 28 gebildet sind. Der Luftstrom 2 tritt links vorn als Abluft in das Gerät ein und verlässt es rechts vorn als Fortluft. Beide Luftströme sind durch eine Trennwand 28a voneinander getrennt. Der in diesem Fall auf der linken Seite in das Gerät einströmende Abluftstrom (Luftstrom 2) wird mithilfe der Leitbleche 28b und 28c in den oberen Geräteteil geleitet, wo er das Wärmetauschermodul B von oben nach unten durchströmt. Die unten aus dem Wärmetauschermodul austretende Fortluft wird durch die Luftleitbleche 28b und 28c in den rechten Geräteteil geleitet. Bei der Ausführung nach Fig. 5 sind die Leitbleche eben, d. h. ungekrümmt und bei der Ausführung nach Fig. 6 gekrümmt bzw. gewölbt.

Analog verhält es sich mit Luftstrom 1 mit der eintretenden Außenluft und der austretenden Zuluft.

In den bis hier beschriebenen Ausführungen sorgen die Umlenkkanäle dafür, dass der jeweilige Luftstrom seine Höhenlage wechselt. Stattdessen bewirken in nicht dargestellten Ausführungen die Umlenkkanäle, dass die Luftströme von links nach rechts oder von rechts nach links wechseln und hierbei die Ein- und Auslässe bei den Luftumlenkeinrichtungen in derselben Höhe verbleiben wie bei dem Wärmetauscherblock, oder aber die Ein- und Auslässe der Luftumlenkeinrichtungen befinden sich alle in derselben, vorzugsweise niedrigen Höhe und damit nahe dem Gebäude.

## Patentansprüche

1. Wärmeaustauscher mit einem Wärmetauscherblock (B) und mit in dem Wärmetauscherblock angeordneten Gegenstrom-Plattenwärmetauschern, wobei auf der ersten Seite des Wärmetauscherblocks im unteren Blockbereich der Außenlufteinlass (3) und im oberen Blockbereich der Zuluftauslass (4) angeordnet ist, wobei auf der entgegengesetzten zweiten Seite des Wärmetauscherblocks (B) im unteren Blockbereich der Fortluftauslass (5) und im oberen Blockbereich der Ablufteinlass (6) angeordnet ist, und wobei vor der ersten Seite des Wärmetauscherblocks eine Luftumlenkeinrichtung (1) angeordnet ist, mit mindestens einem ersten Umlenkkanal (7), der den unteren Außenlufteinlass (3) des Wärmetauscherblocks (B) mit einem oberen Außenlufteinlass (8) der Luftumlenkeinrichtung (1) verbindet, und mit mindestens einem zweiten den ersten Umlenkkanal (7) kreuzenden zweiten Umlenkkanal (9), der den oberen Zuluftauslass (4) des Wärmetauscherblocks (B) mit einem unteren Zuluftauslass (10) der Luftumlenkeinrichtung (1) verbindet, wobei
vor der zweiten Seite des Wärmetauscherblocks (B) eine zweite Luftumlenkeinrichtung (2) angeordnet ist, mit mindestens einem ersten Umlenkkanal (11), der den unteren Fortluftauslass (5) des Wärmetauscherblocks (B) mit einem oberen Fortluftauslass (12) der zweiten Luftumlenkeinrichtung (2) verbindet, und mit mindestens einem zweiten, den ersten Umlenkkanal der zweiten Luftumlenkeinrichtung (2) kreuzenden, zweiten Umlenkkanal (13), der den oberen Ablufteinlass (6) des Wärmetauscherblocks (B) mit einem unteren Ablufteinlass (14) der zweiten Luftumlenkeinrichtung (2) verbindet.

2. Wärmeaustauscher nach Anspruch 1, **dadurch gekennzeichnet, dass** zwei Wärmetauscherblöcke (B) übereinander oder nebeneinander angeordnet sind und die Umlenkkanäle (7, 9, 11, 13), in den vor einer oder beiden Seiten angeordnete(n) Luftumlenkeinrichtung(en) (1, 2), innerhalb der Luftumlenkeinrichtung(en) derart verzweigen, dass jeweils der Lufteinlass (8, 14) der Luftumlenkeinrichtungen (1, 2) mit beiden Lufteinlässen des Wärmetauscherblocks (B) und jeweils der Luftauslass (10, 12) der Luftumlenkeinrichtungen (1, 2) mit beiden Luftauslässen (4a, 4b, 5a, 5b) des Wärmetauscherblocks (B) verbunden ist.

3. Wärmeaustauscher nach einem der vorigen Ansprüche, **dadurch gekennzeichnet, dass** der Außenlufteinlass (8) seitlich ist, und
wobei der Zuluftauslass (10) neben dem Außenlufteinlass (8) der Luftumlenkeinrichtung (1) liegt.

4. Wärmeaustauscher nach Anspruch 3, **dadurch gekennzeichnet, dass** der Zuluftauslass (10) der Luftumlenkeinrichtung (1) in gleicher Höhe liegt, wie der Außenlufteinlass (8) der Luftumlenkeinrichtung (1).

5. Wärmeaustauscher nach Anspruch 3, **dadurch gekennzeichnet, dass** vor der zweiten Seite des Wärmetauscherblocks (B) eine zweite Luftumlenkeinrichtung (2) angeordnet ist, mit mindestens einem ersten Umlenkkanal (11), der den unteren Fortluftauslass (5) des Wärmetauscherblocks (B) mit einem seitlichen Fortluftauslass (12) der zweiten Luftumlenkeinrichtung (2) verbindet, und mit mindestens einem zweiten Umlenkkanal (13), der den oberen Ablufteinlass (6) des Wärmetauscherblocks (B) mit einem Ablufteinlass (14) der zweiten Luftumlenkeinrichtung (2) verbindet, der neben dem Fortluftauslass (12) der zweiten Luftumlenkeinrichtung (2) liegt.

6. Wärmeaustauscher nach Anspruch 5, **dadurch gekennzeichnet, dass** der Ablufteinlass (14) der zweiten Umlenkeinrichtung (2) in gleicher Höhe liegt wie der Fortluftauslass (12) der zweiten Luftumlenkeinrichtung (2).

7. Wärmeaustauscher nach einem der vorherigen Ansprüche, **dadurch gekennzeichnet, dass** die in den Luftumlenkeinrichtungen (1, 2) befindlichen Luftströme einer Luftart jeweils durch mindestens zwei Kanäle geführt sind, die zueinander parallel liegen.

## Claims

1. Heat exchanger having a heat exchanger block (B) and having countercurrent plate heat exchangers which are arranged in the heat exchanger block, the outside air inlet (3) being arranged in the lower block region and the incoming air outlet (4) being arranged in the upper block region on the first side of the heat exchanger block, the exhaust air outlet (5) being arranged in the lower block region and the outgoing air inlet (6) being arranged in the upper block region on the opposite second side of the heat exchanger block (B), and an air deflection device (1) being arranged in front of the first side of the heat exchanger block, having at least one first deflection duct (7) which connects the lower outside air inlet (3) of the heat exchanger block (B) to an upper outside air inlet (8) of the air deflection device (1), and having at least one second deflection duct (9) which crosses the first deflection duct (7) and connects the upper incoming air outlet (4) of the heat exchanger block (B) to a lower incoming air outlet (10) of the air deflection device (1), a second air deflection device (2) being arranged in front of the second side of the heat exchanger block (B), having at least one first deflection duct (11) which connects the lower exhaust air outlet (5) of the heat exchanger block (B) to an upper exhaust air outlet (12) of the second air deflection device (2), and having at least one second deflection duct (13) which crosses the first deflection duct of the second air deflection device (2) and connects the upper outgoing air inlet (6) of the heat exchanger block (B) to a lower outgoing air inlet (14) of the second air deflection device (2).

2. Heat exchanger according to Claim 1, **characterized in that** two heat exchanger blocks (B) are arranged above one another or next to one another, and the deflection ducts (7, 9, 11, 13) in the air deflection device/devices (1, 2) which is/are arranged in front of one or both sides branch within the air deflection device/devices in such a way that in each case the air inlet (8, 14) of the air deflection devices (1, 2) is connected to the two air inlets of the heat exchanger block (B), and in each case the air outlet (10, 12) of the air deflection devices (1, 2) is connected to the two air outlets (4a, 4b, 5a, 5b) of the heat exchanger block (B).

3. Heat exchanger according to either of the preceding claims, **characterized in that** the outside air inlet (8) is on the side, and the incoming air outlet (10) lies next to the outside air inlet (8) of the air deflection device (1).

4. Heat exchanger according to Claim 3, **characterized in that** the incoming air outlet (10) of the air deflection device (1) lies at the same height as the outside air inlet (8) of the air deflection device (1).

5. Heat exchanger according to Claim 3, **characterized in that** a second air deflection device (2) is arranged in front of the second side of the heat exchanger block (B), having at least one first deflection duct (11) which connects the lower exhaust air outlet (5) of the heat exchanger block (B) to a lateral exhaust air outlet (12) of the second air deflection device (2), and having at least one second deflection duct (13) which connects the upper outgoing air inlet (6) of the heat exchanger block (B) to an outgoing air inlet (14) of the second deflection device (2), which outgoing air inlet (14) lies next to the exhaust air outlet (12) of the second air deflection device (2).

6. Heat exchanger according to Claim 5, **characterized in that** the outgoing air inlet (14) of the second deflection device (2) lies at the same height as the exhaust air outlet (12) of the second air deflection device (2).

7. Heat exchanger according to one of the preceding claims, **characterized in that** the air streams of one air type which are situated in the air deflection devices (1, 2) are conducted in each case through at least two ducts which lie parallel to one another.

## Revendications

1. Echangeur de chaleur avec un bloc d'échangeur de chaleur (B) et avec des échangeurs de chaleur à plaques à contre-courant disposés dans le bloc d'échangeur de chaleur, dans lequel sur le premier côté du bloc d'échangeur de chaleur l'entrée d'air extérieur (3) est disposée dans la région inférieure du bloc et la sortie d'air d'alimentation (4) est disposée dans la région supérieure du bloc, dans lequel sur le second côté opposé du bloc d'échangeur (B) la sortie d'air vicié (5) est disposée dans la région inférieure du bloc et l'entrée d'air d'échappement (6) est disposée dans la région supérieure du bloc, et dans lequel un dispositif de déviation d'air (1) est disposé avant le premier côté du bloc d'échangeur de chaleur, avec au moins un premier canal de déviation (7), qui relie l'entrée inférieure d'air extérieur (3) du bloc d'échangeur de chaleur (B) à une entrée supérieure d'air extérieur (8) du dispositif de déviation d'air (1), et avec au moins un deuxième canal de déviation (9) croisant le premier canal de déviation (7), qui relie la sortie supérieure d'air d'alimentation (4) du bloc d'échangeur de chaleur (B) à une sortie inférieure d'air d'alimentation (10) du dispositif de déviation d'air (1), dans lequel un second dispositif de déviation d'air (2) est disposé avant le second côté du bloc d'échangeur de chaleur (B), avec au moins un premier canal de déviation (11), qui relie la sortie inférieure d'air vicié (5) du bloc d'échangeur de chaleur (B) à une sortie supérieure d'air vicié (12) du second dispositif de déviation d'air (2), et avec au moins un second canal de déviation (13) croisant le premier canal de déviation du second dispositif de déviation d'air (2), qui relie l'entrée supérieure d'air d'échappement (6) du bloc d'échangeur de chaleur (B) à une entrée inférieure d'air d'échappement (14) du second dispositif de déviation d'air (2).

2. Echangeur de chaleur selon la revendication 1, **caractérisé en ce que** deux blocs d'échangeur de chaleur (B) sont disposés l'un au-dessus de l'autre ou l'un à côté de l'autre et les canaux de déviation (7, 9, 11, 13) se ramifient dans le/les dispositif(s) de déviation d'air (1, 2) disposé (s) avant un ou les deux côté (s), à l'intérieur du/des dispositif(s) de déviation d'air, de telle manière qu'à chaque fois l'entrée d'air (8, 14) des dispositifs de déviation d'air (1, 2) soit reliée aux deux entrées d'air du bloc d'échangeur de chaleur (B) et qu'à chaque fois la sortie d'air (10, 12) des dispositifs de déviation d'air (1, 2) soit reliée aux deux sorties d'air (4a, 4b, 5a, 5b) du bloc d'échangeur de chaleur (B).

3. Echangeur de chaleur selon l'une quelconque des revendications précédentes, **caractérisé en ce que** l'entrée d'air extérieur (8) est latérale, et dans lequel la sortie d'air d'alimentation (10) est située à côté de l'entrée d'air extérieur (8) du dispositif de déviation d'air (1).

4. Echangeur de chaleur selon la revendication 3, **caractérisé en ce que** la sortie d'air d'alimentation (10) du dispositif de déviation d'air (1) est située à la même hauteur que l'entrée d'air extérieur (8) du dispositif de déviation d'air (1).

5. Echangeur de chaleur selon la revendication 3, **caractérisé en ce qu'**un second dispositif de déviation d'air (2) est disposé avant le second côté du bloc d'échangeur de chaleur (B), avec au moins un premier canal de déviation (11), qui relie la sortie inférieure d'air vicié (5) du bloc d'échangeur de chaleur (B) à une sortie latérale d'air vicié (12) du second dispositif de déviation d'air (2), et avec au moins un second canal de déviation (13), qui relie l'entrée supérieure d'air d'échappement (6) du bloc d'échangeur de chaleur (B) à une entrée d'air d'échappement (14) du second dispositif de déviation d'air (2), qui est située à côté de la sortie d'air vicié (12) du second dispositif de déviation d'air (2).

6. Echangeur de chaleur selon la revendication 5, **caractérisé en ce que** l'entrée d'air d'échappement (14) du second dispositif de déviation d'air (2) est située à la même hauteur que la sortie d'air vicié (12) du second dispositif de déviation d'air (2).

7. Echangeur de chaleur selon l'une quelconque des revendications précédentes, **caractérisé en ce que** les courants d'air d'une nature d'air se trouvant dans les dispositifs de déviation d'air (1, 2) sont guidés respectivement par au moins deux canaux, qui sont situés parallèlement l'un à l'autre.
